# EUROPEAN PATENT SPECIFICATION

(11) **EP 0 452 303 B1**
(45) Date of publication and mention of the grant of the patent: **24.05.1995**
(21) Application number: 89901582.0
(22) Date of filing: 09.01.1989
(51) Int. Cl.: H04N 13/04

(54) **THREE DIMENSIONAL DISPLAY APPARATUS**
DREIDIMENSIONALE ANZEIGEVORRICHTUNG
APPAREIL D'AFFICHAGE TRIDIMENSIONNEL

(43) Date of publication of application: 23.10.1991
(73) Proprietor: TRAVIS, Adrian R. L., South Devon TQ10 9HH (GB)
(72) Inventor: TRAVIS, Adrian R. L., South Devon TQ10 9HH (GB)
(74) Representative: Brunner, Michael John
(86) International application number: PCT/GB89/00016
(87) International publication number: WO 90/07848

(56) References cited:
- EP-A- 0 262 955
- GB-A- 2 206 763
- US-A- 4 717 949

## Description

This invention relates to a three dimensional display apparatus.

Display apparatus are in common use, e.g. in television receivers, computer interfaces, instrumentation and visual display units. Generally these are two dimensional display apparatus, in that they display only a two-dimensional picture.

A variety of cues are present in the picture provided by a two dimensional display, which provide the observer with a perception of depth. Such cues include shadow, size, perspective and obscuration of far objects by close ones. However, two of the most important depth cues which are used by human vision are missing in a conventional two dimensional display. These are the difference between the views seen by the two eyes, and the continuous change of view which an observer would expect if he were moving his head with respect to a true three dimensional image. These two cues are necessary if the observer is to be given a proper perception of three dimensions.

Various display systems have been made which require the user to wear spectacles so that different views of a scene are presented to each eye. These provide human vision with stereoscopic information, but not with the information or cue expected from movement of the head. Further, such spectacles are inconvenient to wear.

Some attempts have been made to construct three dimensional display apparatus which do not require the user to wear spectacles. In may of these apparatus the picture seen on the screen depends on the direction from which the screen is viewed. The picture seen on the screen is that which would be seen of the three dimensional image from the same direction of observation if the three dimensional image were present in place of the display apparatus. The image presented by these apparatus provides all of the information needed by human vision to perceive depth, so is apparently three dimensional. Most of these apparatus have moving parts which make them expensive and delicate.

For a conventional display such as a television screen, a picture of an object is assembled from a two dimensional array of pixels. In a similar way a three dimensional image of an object might be assembled from a three dimensional array of pixels but such an apparatus would be complicated and expensive.

EP-A-0262955 discloses a stereoscopic display which comprises an array of independently controllable light sources, and a lenticular screen. US-A-4717949 disclose an autostereoscopic display which comprises a screen displaying a plurality of thin, vertical light emitting lines, and a light valve located in front of the screen.

In accordance with this invention there is provided a three dimensional display apparatus, comprising a spatial light modulator, a control system controlling said spatial light modulator for causing a plurality of different images of a subject to be formed in succession on said spatial light modulator, each different image being a view of said subject from a different angle, and illuminating means for projecting a beam of light through said spatial light modulator at angles controlled by said control system so that the different images are visible from different directions.

Also in accordance with this invention there is provided a three dimensional display apparatus, comprising a two dimensional display device, a control system controlling said two dimensional display device for causing a plurality of different images of a subject to be formed in succession on said two dimensional display device, each different image being a view of said subject from a different angle, a lens system and a spatial light modulator positioned in front of the two dimensional display device, the spatial light modulator being a device whose optical transparency is electronically controlled, and the control system being coupled to the spatial light modulator to cause the spatial light modulator to be transparent at a spot, the position of which is selectable, the different images formed on the two dimensional display device being visible from different directions dependent upon the location of said spot on the spatial light modulator.

With reference to GB-A-2 206 763, the applicant has voluntarily limited the scope of the present application, and submitted a separate claim for the United Kingdom.

In preferred embodiments of this invention, different views of a subject are projected in different directions from the apparatus, the different views corresponding to the different views of the subject which would be seen from the different directions if that subject were truly three dimensional. The different views may be produced in time-multiplex manner on the spatial light modulator, the two dimensional display device and lens system co-operating to project light through the modulator in the appropriate direction.

A spatial light modulator is a device whose optical transparency or optical reflectivity can be electronically controlled. Such devices can be divided into arrays in which the transparency or reflectivity of each element of the array can be individually controlled. Consequently they can be used to present a picture comprised of many pixels. An example of a spatial light modulator is a liquid crystal display (LCD).

The apparatus in accordance with this invention in effect utilises both lateral multiplexing and time multiplexing. Lateral multiplexing is a technique by which a two dimensional display presents not just one but several pictures in such a way that each picture is visible from a different position of observation. Each picture is a different view of the same solid object, and the positions from which the views are visible correspond to the angles from which the views were imaged. The result is an image which appears three dimensional. The two eyes of an observer see different views because each eye observes from a separate position, and the views seen by the observer change as he moves his head round the display.

In the apparatus in accordance with this invention, instead of presenting several views simultaneously as with conventional lateral multiplexing, the views are presented in sequence while the position from which the display is visible is adjusted. Provided the angle between views is sufficiently fine and the sequence of views is repeated at sufficiently short intervals, the image displayed by the apparatus will appear smooth and three dimensional.

Embodiments of the invention will now be described by way of examples only and with reference to the accompanying drawings, in which:
FIGURE 1 is a diagrammatic section through a three dimensional display apparatus in accordance with the invention;
FIGURE 2 is a ray diagram which demonstrates how a view is displayed by the apparatus of Figure 1;
FIGURE 3 is a diagrammatic plan of a dimensional display apparatus used in a three dimensional television system;
FIGURE 4 is a diagrammatic section through a second embodiment of three dimensional display apparatus where the lens system comprises a lenticular array;
FIGURE 5 is a ray diagram for the apparatus shown in Figure 4;
FIGURE 6 is a diagrammatic section through a third embodiment of three dimensional visual display apparatus where the two dimensional device comprises a lenticular array scanned by a ray of coherent light;
FIGURE 7 is a ray diagram showing use of the apparatus shown in Figure 6 to make a hologram;
FIGURE 8 is a diagrammatic section through an embodiment of three dimensional display apparatus using a cathode ray tube to provide the views and a liquid crystal display to determine the direction in which each view is projected; and
FIGURE 9 is a diagrammatic section through a third embodiment of three dimensional display apparatus where the lens system includes an active optical element.

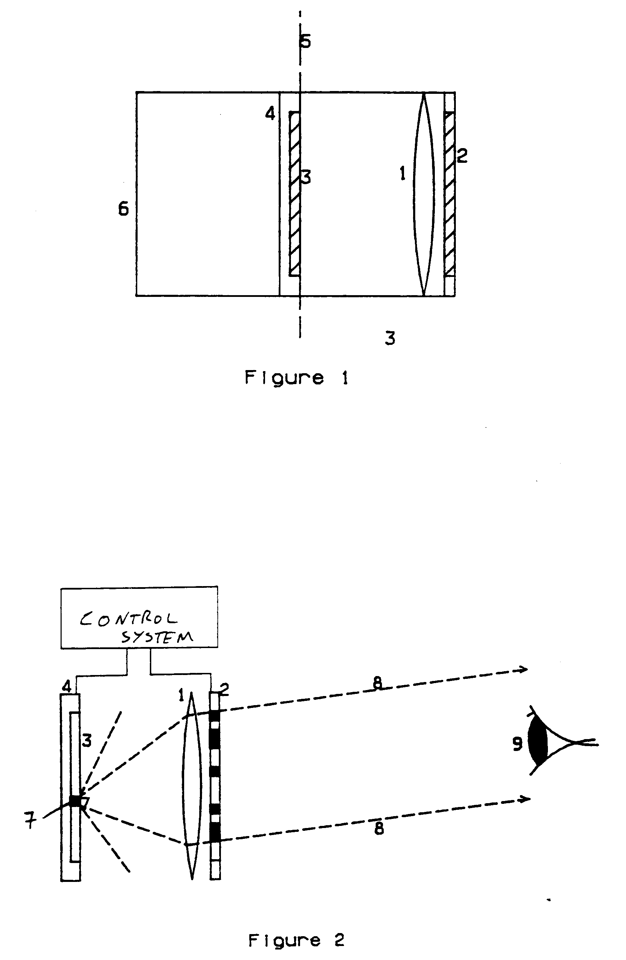

Referring to the apparatus shown in Figures 1 and 2, a lens 1 is placed face to face against a spatial light modulator 2. The screen 3 of a two dimensional display device 4 is placed in the focal plane 5 of the lens 1. An opaque box 6 is fitted round the rear and sides of the assembly to exclude extraneous light.

A succession of two dimensional pictures of the three dimensional image are displayed by the spatial light modulator. Each picture portrays what would be seen of the image from a specified point of view, and is hereafter referred to as a "view". Simultaneous to the display of a view, a spot of light 7 is displayed on the screen 3 of the two dimensional display device 4. When light from the spot 7 passes through the lens 1, it is converted into parallel rays of light 8 whose direction depends on the position of the spot 7 in the screen 3 of the two dimensional display device 4, and on the angle through which the lens 1 deflects light collimated from the spot if lens 1 is an active optical element. The position of the spot 7 is so controlled that light passes through the spatial light modulator 2 only to that view point 9 from which the view on the spatial light modulator 2 is supposed to be seen. The width of the spot 7 determines the arc of view points within which the view is visible. The display of each view is to be repeated sufficiently quickly for the intervening dark periods not to be noticeable by the human eye. Consequently an image which is apparently three dimensional is perceived.

Among the possible types of two dimensional display devices 4 are cathode ray tubes, electro-luminescent displays, arrays of light emitting diodes, spatial light modulators with background illumination, and screens illuminated by a scanned ray of light.

Among the possible types of lens 1 are lenses with spherical surfaces, lenticular arrays of many spherical or cylindrical lenses, Fresnel lenses, holographic optical elements and active optical elements which act not only to collimate light from the focal plane but also to deflect it through an adjustable angle.

Among the possible types of three dimensional image which might be displayed by a three dimensional display device are stereoscopic images, multiplexed images, images in parallax, fully three dimensional images, and images in colour, as follows.

For stereoscopic images, only two views of the image need be presented: one for each eye of the observer.

In certain instances it might be desirable to project the same view or set of views to several different observers. This could be done by having not one but several spots 7 of light on the two dimensional display device 4 simultaneous to the display of each view on the spatial light modulator 2.

For an image in parallax, only views from a single plane round an image need be provided.

For colour images, each view comprises a red, a blue and a green picture. The pictures may be presented in succession on the spatial light modulator 2 and the colour of the light from the screen 3 of the two dimensional display device 4 varied as appropriate for the picture. Alternatively coloured filters may be placed over pixel positions on the spatial light modulator 2 and the two dimensional display device 4 made to emit white light. The three pictures are presented simultaneously on the spatial light modulator 2 so that the pixels of each picture are displayed at a pixel position covered in a filter of the appropriate colour.

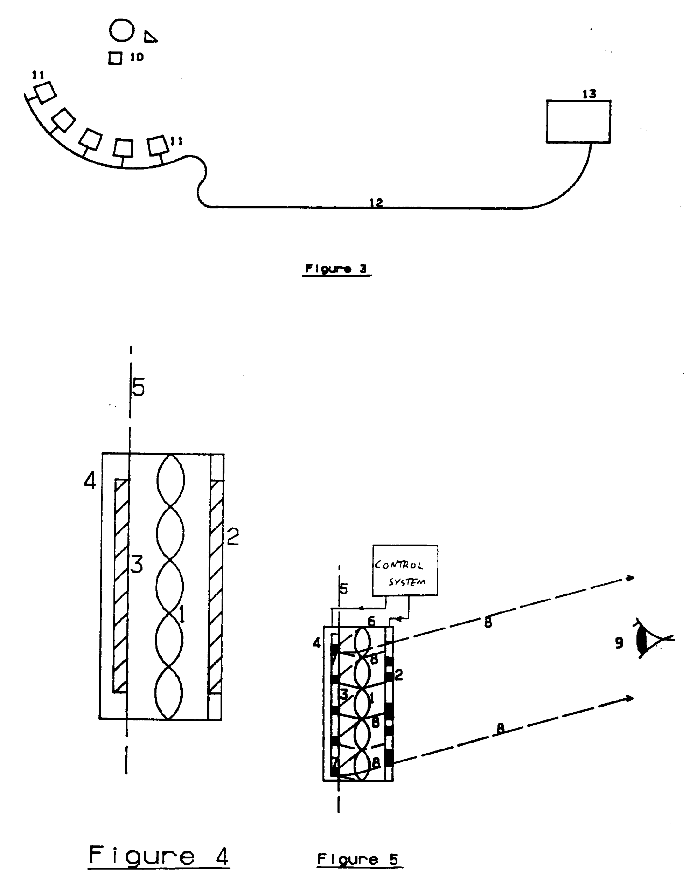

As show in Figure 3, the three dimensional display apparatus may be used as the screen 13 for a three dimensional television system. The scene to be televised 10 is surrounded by a set of conventional television cameras 11, each of which would record a corresponding view. The views would then be transmitted, e.g. via an optical fibre link 12, to the screen 13. Data compression techniques may be used to reduce the information transmission rate if required.

Referring to Figures 4 and 5, a succession of views are displayed by the spatial light modulator 2. Simultaneous to the display of a view, spots 7 of light are displayed on the screen 3 of the two dimensional display device 4. When light from each spot 7 passes through the nearest lens 1 of the lenticular array, it is converted into parallel rays of light 8 whose direction depends on the position of the spot 7 in the screen 3 of the two dimensional display device 4. The positions of the spots 7 are so controlled that light passes through the spatial light modulator 2 only to that view point 9 from which the view on the spatial light modulator 2 is supposed to be seen. The display of each view is to be repeated sufficiently quickly for the intervening dark periods not to be noticeable by the human eye. Consequently an image which is apparently three dimensional is perceived. The advantage of this embodiment is that the thickness of the three dimensional display device is much less than in the first embodiment.

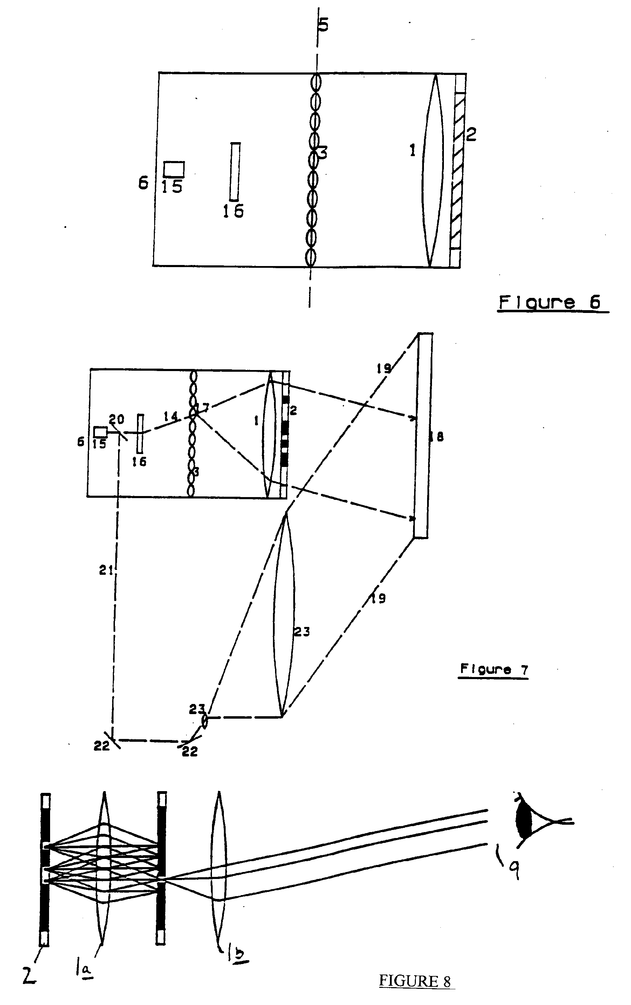

Referring to the apparatus shown in Figure 6, the three dimensional image is displayed as in the first embodiment with the refinement that the two dimensional display device emits coherent light. A ray of light 14 from a laser 15 passes through a beam scanner 16 which is a device that can control the position to which the ray of light travels. Simultaneous to the display of a view on the spatial light modulator 2 the ray of light is directed by the beam scanner 16 to a selected lens 17 in the lenticular array 3 from which light must be emitted if the view is to be seen only from the appropriate viewpoint 9. The lenticular array 3 forms the screen of the two dimensional display device. The lens 17 defocuses the ray so that it emits light just as the spot 7 in the first embodiment with the exception that, in this third embodiment, light from the spot 7 is coherent. This makes it possible to record holograms from the screen.

Referring to Figure 7, a hologram can be recorded by placing a photographic plate 18 against the screen and illuminating the photographic plate with a coherent optical reference ray 19 simultaneous to the three dimensional image being displayed on the three dimensional display device 13. The optical reference 19 is created by splitting part of the ray of light 14 from the laser 15 with a beam splitter 20. The redirected light 21 is reflected by mirrors 22 and the beam widened by lenses 23 so that the optical reference 19 illuminates the whole of the photographic plate 18.

A basic three dimensional display apparatus in accordance with the embodiment of Figures 1 and 2 may comprise a cathode ray tube for the two dimensional display device and a liquid crystal display (LCD) for the spatial light modulator. It will be appreciated that, the cathode ray tube being positioned in the focal plane of the lens so that the spot of light emitted at any instant by the cathode ray tube is collimated into a parallel beam projecting the image on the LCD in one direction only, the action of the lens may be described mathematically as a Fourier transform. Thus, the spatial distribution of amplitude as light passes through one focal plane of a lens is the Fourier transform of the spatial distribution of amplitude as light passes through the other focal plane of the lens.

The frame rate with LCD's is less than that available at present with cathode ray tubes.

An alternative embodiment is shown in Figure 8 which uses a cathode ray tube to present views and can present more views without flicker than the one using an LCD. The cathode ray tube 2 can be made visible from discrete positions 9 by use of two lenses 1a, 1b and a LCD 4. The two lenses are placed face to face with one each of their focal planes coplanar. The LCD is placed in the focal plane between the lenses, and the CRT is placed in the other focal plane of the outer lens 1b.

The first lens 1a images the Fourier transform of the image on the CRT onto the LCD. The second lens also performs a Fourier transform, but except for a sign change this is equivalent to an inverse Fourier transform, so effectively the second lens reproduces the original picture. A single spot is made transparent on the LCD, the remainder of the LCD being left opaque. Because the LCD is in the Fourier transform plane, its effect is to control the position 9 from which the CRT image is visible, and since only a single spot is transparent on the LCD and CRT image becomes visible from only a single position 9.

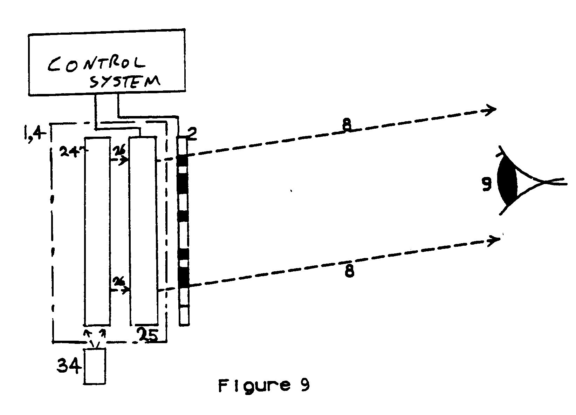

Referring to Figure 9, the lens system and two dimensional diplay device 1,4 in this embodiment are formed by an active optical element having a holographic optical element 24 and a large area beam scanner 25. Light from a laser 34 is collimated by the holographic optical element 24 into parallel rays of light 26 which are directed towards the large area beam scanner 25. The large area beam scanner 25 is electronically controlled and acts like a conventional beam scanner in that it deflects all transmitted rays of light through an adjustable angle, but is to cover a large area similar to the area of the spatial light modulatir 2. In this embodiment it is the lens system 1,4 which controls the position 9 from which the spatial light modulator image is visible.

## Claims (Claims for the following Contracting State(s): AT, BE, CH, DE, FR, GB, IT, LI, NL, SE)

1. A three dimensional display apparatus, comprising a spatial light modulator (2), a control system controlling said spatial light modulator (2) for causing a plurality of different images of a subject to be formed in succession on said spatial light modulator (2), each different image being a view of said subject from a different angle, and illuminating means (3,4,1) for projecting a beam of light (8-8) through said spatial light modulator (2) at angles controlled by said control system so that the different images are visible from different directions.

2. A three dimensional display apparatus as claimed in claim 1, in which the illuminating means (3,4,1) comprises a two dimensional display device (3,4) and a lens system (1) for forming said beam of light (8-8) from a spot of light (7) emitted by the two dimensional display device (3,4) at selected locations thereon.

3. A three dimensional display apparatus as claimed in claim 2, in which the lens system (1) comprises a lenticular array and the control system controls the two dimensional display (3,4) to emit light from a plurality of spots (7) corresponding to respective lens of the array such that a corresponding plurality of parallel beams of light emerge from the array in a common direction for each image formed on the spatial light modulator (2).

4. A three dimensional display apparatus as claimed in claim 2, in which the two dimensional display device comprises a screen positioned in the focal plane of the lens system (1) and a light source (15) and a beam scanner (16) disposed behind the screen (3) to direct light from the light source (15) to selected spots of the screen, to direct a beam of light through the spatial light modulator (2) in a direction dependent upon the selected spot of the screen (3) to which the beam scanner (16) directs light from the light source (15).

5. A three dimensional display apparatus as claimed in claim 1, in which the illuminating means comprises a large area beam scanner (25) receiving a large area light beam (26) and deflecting said beam through a controlled angle.

6. A three dimensional display apparatus, comprising a two dimensional display device (2), a control system controlling said two dimensional display device for causing a plurality of different images of a subject to be formed in succession on said two dimensional display device, each different image being a view of said subject from a different angle, a lens system (1a,1b) and a spatial light modulator positioned in front of the two dimensional display device (2), the spatial light modulator being a device whose optical transparency is electronically controlled, and the control system being coupled to the spatial light modulator to cause the spatial light modulator to be transparent at a spot, the position of which is selectable, the different images formed on the two dimensional display device (2) being visible from different directions dependent upon the location of said spot on the spatial light modulator.

## Claims (Claims for the following Contracting State(s): GB)

1. A three dimensional apparatus comprising a spatial light modulator (2), a control system controlling said spatial light modulator (2) for causing a plurality of different images of a subject to be formed in succession on said spatial light modulator (2), each different image being a view of said subject from a different angle, and illuminating means (3,4,1) for projecting a beam of light (8-8) through said spatial light modulator (2) at angles controlled by said control system so that the different images are visible from different directions, wherein the illuminating means comprises a large area beam scanner (25) receiving a large area light beam (26) and deflecting said large area light beam through a controlled angle.

## Patentansprüche (Patentansprüche für folgende(n) Vertragsstaat(en): AT, BE, CH, DE, FR, GB, IT, LI, NL, SE)

1. Dreidimensionale Anzeigevorrichtung mit einem räumlichen Lichtmodulator (2), einem Steuersystem zum Steuern des räumlichen Lichtmodulators (2), um viele unterschiedliche Abbildungen eines Objektes in Folge auf dem räumlichen Lichtmodulator (2) zu erzeugen, wobei jede unterschiedliche Abbildung eine Ansicht des Objektes aus einem anderen Winkel ist und mit Beleuchtungsmitteln (3, 4, 1), um den Lichtstrahl (8-8) durch den räumlichen Lichtmodulator (2) in Winkeln abzubilden, die von dem Steuersystem gesteuert werden, so daß die unterschiedlichen Abbildungen aus unterschiedlichen Richtungen sichtbar sind.

2. Dreidimensionale Anzeigevorrichtung nach Anspruch 1, in welcher das Beleuchtungsmittel (3, 4, 1) eine zweidimensionale Anzeigeeinrichtung (3, 4) und ein Linsensystem (1) umfaßt, um den Lichtstrahl (8-8) aus einem Lichtfleck (7) zu formen, welcher von der zweidimensionalen Anzeigeeinrichtung (3, 4) an darauf ausgewählten Orten emittiert wird.

3. Dreidimensionale Anzeigevorrichtung nach Anspruch 2, in welcher das Linsensystem (1) eine Linsenanordnung umfaßt und das Steuersystem die zweidimensionale Anzeigeeinrichtung (3, 4) steuert, um Licht von mehreren Flecken (7) zu emittieren, die mit entsprechenden Linsen der Anordnung so korrespondieren, daß die übereinstimmende Mehrheit der parallelen Lichtstrahlen aus der Anordnung in einer für jede auf dem räumlichen Lichtmodulator (2) geformten Abbildung geeigneten Richtung austreten.

4. Dreidimensionale Anzeigevorrichtung nach Anspruch 2, in welcher die zweidimensionale Anzeigeeinrichtung einen Bildschirm umfaßt, welcher in der Brennebene des Linsensystems (1) angeordnet ist, und eine Lichtquelle (15) und einen Strahlabtaster (16), der hinter dem Bildschirm (3) plaziert ist, um Licht der Lichtquelle (15) auf ausgewählte Flecken des Bildschirms zu lenken, und um den Lichtstrahl durch den räumlichen Lichtmodulator (2) in eine Richtung zu lenken, die von dem ausgewählten Fleck auf dem Bildschirm (3) abhängig ist, auf welchen der Strahlabtaster (16) Licht der Lichtquelle (15) lenkt.

5. Dreidimensionale Anzeigevorrichtung nach Anspruch 1, in welcher das Beleuchtungsmittel einen großflächigen Strahlabtaster (25) umfaßt, welcher einen großflächigen Lichtstrahl (26) empfängt und den Strahl in einen gesteuerten Winkel ablenkt.

6. Dreidimensionale Anzeigevorrichtung mit einer zweidimensionalen Anzeigeeinrichtung (2), einem Steuersystem zum Steuern der zweidimensionalen Anzeigeeinrichtung, wodurch mehrere unterschiedliche Abbildungen eines Objektes bewirkt werden, die in Folge auf der zweidimensionalen Anzeigeeinrichtung gebildet werden sollen, wobei jede unterschiedliche Abbildung eine Ansicht des Objektes aus einem anderen Winkel ist, mit einem Linsensystem (1a, 1b) und einem räumlichen Lichtmodulator, der vor der zweidimensionalen Anzeigeeinrichtung (2) angeordnet ist, wobei der räumliche Lichtmodulator eine Einrichtung ist, deren optische Transparenz elektronisch gesteuert ist, und das Steuersystem mit dem räumlichen Lichtmodulator verbunden ist, um zu veranlassen, daß der Lichtmodulator an einem Fleck, dessen Position wählbar ist, transparent ist, wobei die unterschiedlichen, auf der zweidimensionalen Anzeigeeinrichtung (2) gebildeten Abbildungen aus unterschiedlichen Richtungen sichtbar sind, welche von dem Ort des Fleckens auf dem räumlichen Lichtmodulator abhängen.

## Patentansprüche (Patentansprüche für folgende(n) Vertragsstaat(en): GB)

1. Dreidimensionale Anzeigevorrichtung mit einem räumlichen Lichtmodulator (2), einem Steuersystem zum Steuern des räumlichen Lichtmodulators (2), wodurch mehrere unterschiedliche Abbildungen eines Objektes bewirkt werden, die in Folge auf dem räumlichen Lichtmodulator (2) gebildet werden sollen, wobei jede unterschiedliche Abbildung eine Ansicht des Objektes aus einem anderen Winkel ist, und mit Beleuchtungsmitteln (3, 4, 1), um einen Lichtstrahl (8-8) durch den räumlichen Lichtmodulator (2) in Winkeln abzubilden, die von dem Steuersystem so gesteuert werden, daß die unterschiedlichen Abbildungen aus unterschiedlichen Richtungen sichtbar sind, wobei das Beleuchtungsmittel einen großflächigen Strahlabtaster (25) umfaßt, welcher einen großflächigen Lichtstrahl (26) empfängt und diesen großflächigen Lichtstrahl in gesteuerte Winkel ablenkt.

## Revendications (Revendications pour l'(les) Etat(s) contractant(s) suivant(s): AT, BE, CH, DE, FR, GB, IT, LI, NL, SE)

1. Dispositif d'affichage en trois dimensions comprenant un modulateur de lumière spatial (2), un système de commande qui commande ledit modulateur de lumière spatial (2) pour provoquer la formation en succession d'une pluralité d'images différentes d'un sujet sur ledit modulateur de lumière spatial (2), chaque image différente étant une vue dudit sujet prise depuis un angle différent, et un moyen d'éclairement (3, 4, 1) pour projeter un faisceau de lumière (8-8) au travers dudit modulateur de lumière spatial (2) selon des angles commandés par ledit système de commande de telle sorte que les images différentes soient visibles depuis des directions différentes.

2. Dispositif d'affichage en trois dimensions selon la revendication 1, dans lequel le moyen d'éclairement (3, 4, 1) comprend un dispositif d'affichage en deux dimensions (3, 4) et un système de lentille (1) pour former ledit faisceau de lumière (8-8) à partir d'un point lumineux (7) émis par le dispositif d'affichage en deux dimensions (3, 4) en des emplacements sélectionnés dessus.

3. Dispositif d'affichage en trois dimensions selon la revendication 2, dans lequel le système de lentille (1) comprend un réseau lenticulaire et le système de commande commande l'affichage en deux dimensions (3, 4) afin d'émettre de la lumière à partir d'une pluralité de points (7) correspondant aux lentilles respectives du réseau de telle sorte qu'une pluralité correspondante de faisceaux parallèles de lumière émergent depuis le réseau suivant une direction commune pour chaque image formée sur le modulateur de lumière spatial (2).

4. Dispositif d'affichage en trois dimensions selon la revendication 2, dans lequel le dispositif d'affichage en deux dimensions comprend un écran positionné dans le plan focal du système de lentille (1) et une source de lumière (15) ainsi qu'un analyseur de faisceau (16) disposés derrière l'écran (3) afin de diriger la lumière provenant de la source de lumière (15) sur des points sélectionnés de l'écran, afin de diriger un faisceau de lumière qui a traversé le modulateur de lumière spatial (2) suivant une direction qui dépend du point sélectionné de l'écran (3) sur lequel l'analyseur de faisceau (16) dirige la lumière provenant de la source de lumière (15).

5. Dispositif d'affichage en trois dimensions selon la revendication 1, dans lequel le moyen d'éclairement comprend un analyseur de faisceau de section importante (25) qui reçoit un faisceau lumineux de section importante (26) et qui dévie ledit faisceau d'un angle commandé.

6. Dispositif d'affichage en trois dimensions comprenant un dispositif d'affichage en deux dimensions (2), un système de commande qui commande ledit dispositif d'affichage en deux dimensions pour provoquer la formation en succession d'une pluralité d'images différentes d'un sujet sur ledit dispositif d'affichage en deux dimensions, chaque image différente étant une vue dudit sujet prise depuis un angle différent, un système de lentille (1a, 1b) et un modulateur de lumière spatial positionnés à l'avant du dispositif d'affichage en deux dimensions (2), le modulateur de lumière spatial étant un dispositif dont la transparence optique est commandée électroniquement, et le système de commande étant couplé au modulateur de lumière spatial pour faire en sorte que le modulateur spatial soit transparent pour un point dont la position peut être sélectionnée, les images différentes formées sur le dispositif d'affichage en deux dimensions (2) étant visibles depuis différentes directions en fonction de l'emplacement dudit point sur le modulateur de lumière spatial.

## Revendications (Revendications pour l'(les) Etat(s) contractant(s) suivant(s): GB)

1. Dispositif d'affichage en trois dimensions comprenant un modulateur de lumière spatial (2), un système de commande qui commande ledit modulateur de lumière spatial (2) pour provoquer la formation en succession d'une pluralité d'images différentes d'un sujet sur ledit modulateur de lumière spatial (2), chaque image différente étant une vue dudit sujet prise depuis un angle différent, et un moyen d'éclairement (3, 4, 1) pour projeter un faisceau de lumière (8-8) au travers dudit modulateur de lumière spatial (2) selon des angles commandés par ledit système de commande de telle sorte que les images différentes soient visibles depuis des directions différentes, dans lequel le moyen d'éclairement comprend un analyseur de faisceau de section importante (25) qui reçoit un faisceau lumineux de section importante (26) et qui dévie ledit faisceau lumineux de section importante d'un angle commandé.
